# EUROPÄISCHE PATENTSCHRIFT

(11) **EP 1 995 574 B1**
(45) Veröffentlichungstag und Bekanntmachung des Hinweises auf die Patenterteilung: **16.01.2013**
(21) Anmeldenummer: 07108529.4
(22) Anmeldetag: 21.05.2007
(51) Int. Cl.: G01G 3/14, G01L 1/22

(54) **Wägezelle**
Weighing cell
Cellule de pesage

(43) Veröffentlichungstag der Anmeldung: 26.11.2008
(73) Patentinhaber: Sartorius Mechatronics T&H GmbH, 22145 Hamburg (DE)
(72) Erfinder: Vayhinger, Klaus, 21337 Lüneburg (DE)
(74) Vertreter: Cohausz & Florack

(56) Entgegenhaltungen:
- DE-A1- 3 824 636
- DE-A1- 10 203 872
- US-A- 4 079 624
- US-A- 4 589 291

## Beschreibung

Die vorliegende Erfindung betrifft eine Wägezelle mit einem einen Stauchstab bildenden Wägezellenkörper, umfassend einen ersten Lasteinleitungsabschnitt, einen zweiten Lasteinleitungsabschnitt, und einen Messabschnitt, der koaxial zwischen dem ersten Lasteinleitungsabschnitt und dem zweiten Lasteinleitungsabschnitt angeordnet ist, wobei der Messabschnitt und mindestens einer der Lasteinleitungsabschnitte jeweils unterschiedliche Materialien aufweisen. Ferner betrifft die Erfindung ein Verfahren zur Herstellung einer Wägezelle, mit einem einen Stauchstab bildenden Wägezellenkörper, umfassend einen ersten Lasteinleitungsabschnitt, einen zweiten Lasteinleitungsabschnitt und einen koaxial zwischen dem ersten Lasteinleitungsabschnitt und dem zweiten Lasteinleitungsabschnitt angeordneten Messabschnitt, wobei der Messabschnitt und mindestens einer der Lasteinleitungsabschnitte jeweils unterschiedliche Materialien aufweisen.

Die heutigen Wägezellenkörper, auch Messelemente genannt, in Wägezellen sind aus Gründen des Korrosionsschutzes häufig aus rostfreiem Stahl gefertigt. Jedoch haben Stähle mit einer hohen Korrosionsbeständigkeit nicht gleichzeitig brauchbare messtechnische Eigenschaften, insbesondere Linearität, Hysterese etc., weshalb für den Wägezellenkörper ein Stahl mit einer vergleichsweise geringen Korrosionsbeständigkeit verwendet wird und stattdessen ein Gehäuse mit einer hohen Korrosionsbeständigkeit vorgesehen wird, in welchem der Wägezellenkörper angeordnet ist. Problematisch bei dieser Lösung ist allerdings, dass zwangsläufig Teile des Wägezellenkörpers aus dem Gehäuse herausragen, insbesondere Teile der Lasteinleitungsabschnitte, was wiederum dazu führt, dass diese Teile im Laufe der Zeit der Korrosion unterliegen.

Eine Weiterentwicklung von Wägezellen besteht daher darin, den aus den Gehäusen herausragenden Teil des Wägezellenkörpers vor Korrosion zu schützen, indem im Kopfbereich und im Fußbereich des Wägezellenkörpers eine Kappe auf die Lasteinleitungsabschnitte aufgesetzt wird, die anschließend mit dem Gehäuse verschweißt wird und aus besonders hochwertigem, korrosionsbeständigem Stahl besteht. Der Stahl dieser Kappen muss neben einer guten Korrosionsbeständigkeit auch eine geeignete Härte und Schweißbarkeit aufweisen, nicht aber besonders gute messtechnische Eigenschaften.

Die Kappen, die häufig bei Stauchstäben eingesetzt werden, haben jedoch den Nachteil, dass die Lasteinleitung über die Fügeflächen zwischen Kappe und Lasteinleitungsabschnitt des Wägezellenkörpers schlecht definiert ist. Außerdem treten beim Be- und Entlasten kleinste Verschiebungen der Fügeflächen gegeneinander auf. Beides führt zu Veränderungen der Linearität, Hysterese und Reproduzierbarkeit, wodurch Genauigkeitsklassen von C3 oder besser, teils schon D1, kaum erreicht werden.

Aus der DE 38 24 636 A1 ist ein Biegestab bekannt, bei dem die Krafteinleitung nicht in Richtung der Längsachse des Wägezellenkörpers, sondern senkrecht dazu erfolgt und auf diese Weise eine Biegung des Wägezellenkörpers herbeigeführt wird. Im Gegensatz dazu offenbaren die US 4,079,624 und die US 4,589,291 Wägezellen nach dem Stauchstab-Prinzip. Die DE 102 03 872 A1 beschreibt schließlich einen Kraftaufnehmer, der in der Lage ist, Dehnungen, Stauchungen und Biegungen des Messkörpers in der Kraftmesszone zu erfassen.

Die US 2,855,489 offenbart ebenfalls eine Wägezelle mit einem Stauchstab. Die Wägezelle weist einen Messabschnitt mit einem ersten Lasteinleitungsabschnitt und einem zweiten Lasteinleitungsabschnitt auf, wobei die beiden Lasteinleitungsabschnitte aus einem anderen Material wie der Messabschnitt bestehen können. Problematisch ist jedoch, dass die Fügeflächen, also die Flächen, an denen sich Lasteinleitungsabschnitte und Messabschnitt berühren, zumindest so groß sind, wie der Messabschnitt selber ist. Mit anderen Worten dient die jeweilige gesamte horizontale Fläche des Messabschnitts als Kontaktfläche bzw. Fügefläche zur jeweiligen horizontalen Oberfläche der Lasteinleitungsabschnitte. Demnach erfolgt jedoch die Krafteinleitung über die gesamte horizontale Oberfläche des Messabschnitts. Nachteilig hieran ist, dass eine plastische Verformung der Fügeflächen nicht möglich ist. Insbesondere sind keine exakten Fügeflächen definiert, so dass bei der Wägezelle unweigerlich die Reproduzierbarkeit gering ist.

Es ist daher die Aufgabe der vorliegenden Erfindung, eine Wägezelle der eingangs genannten Art derart weiterzubilden, dass sie eine verbesserte Reproduzierbarkeitgewährleistet.

Die zuvor hergeleitete und aufgezeigte Aufgabe wird bei einer Wägezelle der eingangs genannten Art dadurch gelöst, dass der Wägezellenkörper mehrteilig ausgebildet ist, wobei der Messabschnitt und der Lasteinleitungsabschnitt als separate Bauteile ausgebildet sind, wobei sich der Messabschnitt und der jeweilige Lasteinleitungsabschnitt an einer Fügefläche berühren, wobei eine Fügefläche an einem umlaufenden und in axialer Richtung hervorstehenden Fügevorsprung, der am Messabschnitt angeformt ist, ausgebildet ist, wobei die Fügefläche zum Lasteinleitungsabschnitt als gegenüberliegendes Bauteil weist.

Die Aufgabe wird ferner bei einer Wägezelle der eingangs genannten Art dadurch gelöst, dass der Wägezellenkörper mehrteilig ausgebildet ist, wobei der Messabschnittund der Lasteinleitungsabschnitt als separate Bauteile ausgebildet sind, wobei sich der Messabschnitt und der jeweilige Lasteinleitungsabschnitt an einer Fügefläche berühren, wobei eine Fügefläche an einem umlaufenden und in axialer Richtung hervorstehenden Fügevorsprung, der am Lasteinleitungsabschnitt angeformt ist, ausgebildet ist, wobei die Fügefläche zum Messabschnitt als gegenüberliegendes Bauteil weist.

Durch den erfindungsgemäß vorgesehenen Aufbau wird eine hohe Reproduzierbarkeit erreicht, da bei Erreichen oder Überschreiten der Gebrauchslast eine plastische Verformung des Fügevorsprungs, insbesondere seiner Fügefläche, oder eine plastische Verformung des gegenüberliegenden Bauteils erfolgt. Wird also der jeweilige Lasteinleitungsabschnitt auf den Messabschnitt aufgesetzt und dieses zusammengesetzte Messelement einmalig bis zu oder knapp oberhalb der Gebrauchslast belastet, so verformt sich die Fügefläche des Messabschnitts und oder die Fügefläche des Lasteinleitungsabschnitts unter jeweils gegenseitigem Einfluss derart, dass sich die Oberflächen beider Bauteile exakt aneinander angleichen bzw. leicht in einander eindrücken. Damit werden die Fügeflächen exakt definiert und somit eine hohe Reproduzierbarkeit erreicht.

Dadurch, dass der Messabschnitt zumindest teilweise, vorzugsweise vollständig, aus einem anderen Material als der Lasteinleitungsabschnitt im Kopf- oder Fußbereich hergestellt ist, besteht die Möglichkeit, jeden dieser Abschnitte mit dem für seine Funktion und Anordnung optimalen Material auszustatten. So kann für den Messabschnitt des Wägezellenkörpers ohne Rücksicht auf die benachbarten Lasteinleitungsabschnitte ein Material verwendet werden, welches optimale messtechnische Eigenschaften, insbesondere hinsichtlich einer optimalen Hysterese und Kriechen, aufweist. Die Korrosionsbeständigkeit spielt dagegen beim Messabschnitt gegenüber den messtechnischen Eigenschaften eine untergeordnete Rolle, da der Messabschnitt ohne weiteres durch ein korrosionsbeständiges Gehäuse geschützt werden kann. Der Lasteinleitungsabschnitt im Kopfbereich und/oder im Fußbereich des Wägezellenkörpers kann hingegen, da dieser lediglich zur Aufnahme, Einleitung und Führung der Last dient und keine besonderen messtechnischen Eigenschaften aufweisen muss, aus einem Material gefertigt werden, das in erster Linie eine hohe Korrosionsbeständigkeit aufweist. Die messtechnischen Eigenschaften des Materials des jeweiligen Lasteinleitungsabschnitts können vernachlässigt werden.

Mit anderen Worten, durch die Verwendung unterschiedlicher Materialien für die verschiedenen Abschnitte des Wägezellenkörpers wird eine Wägezelle geschaffen, die einerseits optimale messtechnische Eigenschaften hat, die nämlich durch das Material des Messabschnitts bewirkt werden, und andererseits einen optimalen Korrosionsschutz an den Stellen mitbringt, die den Umgebungseinflüssen wie Schmutz und Feuchtigkeit in der Regel am meisten ausgesetzt sind, nämlich den Lasteinleitungsabschnitten, die wiederum ein besonderes korrosionsbeständiges Material aufweisen. Gleichzeitig werden zusätzliche Bauteile, wie beispielsweise Kappen, vermieden, die im Stand der Technik einen negativen Einfluss auf die Linearität, die Hysterese und die Reproduzierbarkeit haben.

Im übrigen kann unter anderem bei dem Material des Messabschnitts auch ein auf einfache Weise zu zerspanendes Material verwendet werden, da im Messabschnitt häufig äußerst präzise Bohrungen in das Material des Wägezellenkörpers einzubringen sind, in denen Teile der Messtechnik, unter anderem Dehnungsmessstreifen, angeordnet werden können. Entsprechendes gilt auch für die Lasteinleitungsabschnitte, welche im Bedarfsfall auch eine gute Zerspanbarkeit aufweisen müssen, jedoch gleichzeitig auch eine hohe Korrosionsbeständigkeit gewährleisten müssen. Da es kaum möglich ist, nach heutigem Kenntnisstand ein Material vorzusehen, dass alle drei Eigenschaften, nämlich messtechnische Eigenschaften, Korrosionsbeständigkeit und Zerspanbarkeit, auf optimale Weise erfüllt, kann bei der erfindungsgemäßen Wägezelle das Material des jeweiligen Abschnitts immer unabhängig von dem Material des anderen Abschnitts gewählt werden, wobei zumindest eine der genannten Eigenschaften vernachlässigt werden kann.

Gemäß einer Ausgestaltung der erfindungsgemäßen Wägezelle besteht der Messabschnitt zumindest teilweise, vorzugsweise vollständig, aus einem ersten Metall und der Lasteinleitungsabschnitt zumindest teilweise, vorzugsweise vollständig, aus einem zweiten Metall. Es sei darauf hingewiesen, dass wenn im folgenden von einem Lasteinleitungsabschnitt gesprochen wird, selbstverständlich auch beide Lasteinleitungsabschnitte gemeint sein können. Es ist also denkbar, dass der Messabschnitt ein erstes Material, beispielsweise an anderes Metall, aufweist und nur einer der Lasteinleitungsabschnitte oder auch beide Lasteinleitungsabschnitte ein anderes Material, beispielsweise Metall, aufweisen. Es ist auch denkbar, dass der erste Lasteinleitungsabschnitt ein anderes Material als der zweite Lasteinleitungsabschnitt aufweist.

Bei der Verwendung von Metall als Material für den Messabschnitt und den bzw. die Lasteinleitungsabschnitte ist die Korrosionsbeständigkeit des zweiten Metalls vorzugsweise höher als die des ersten Metalls. Mit anderen Worten, die Korrosionsbeständigkeit des Metalls der Lasteinleitungsabschnitte ist in diesem Fall höher als die Korrosionsbeständigkeit des Metalls des Messabschnitts. Insbesondere ist die Korrosionsbeständigkeit des zweiten Metalls höher als die des Stahls X5CrNiCuNb16-4, welcher auch unter der Werkstoffnummer 1.4542 bekannt ist. Dieser Stahl wird im Stand der Technik häufig verwendet, da er sowohl durchschnittliche messtechnische Eigenschaften als auch eine durchschnittliche Korrosionsbeständigkeit bietet. Erfindungsgemäß kann dagegen, da das Material der Lasteinleitungsabschnitte unabhängig vom Material des Messabschnitts gewählt werden kann, die Korrosionsbeständigkeit des Materials der Lasteinleitungsabschnitte im Vergleich zu der des Stahls 1.4542 deutlich höher ausfallen. Einen negativen Einfluss auf die messtechnischen Eigenschaften der Wägezellen hat dies nicht, da diese von dem Messabschnitt festgelegt werden, der erfindungsgemäß ein anderes Material aufweist.

Gemäß einer vorteilhaften Ausgestaltung ist das zweite Metall ein Stahl, vorzugsweise ein Edelstahl. Dabei ist der Stahl vorzugsweise ein nichtrostender Stahl. Als besonders geeignet für das Material eines Lasteinleitungsabschnitts hat sich dabei ein Stahl erwiesen, dessen Massenanteil von Chrom mindestens 10,5 Gew.%, vorzugsweise mindestens 15 Gew.%, beträgt. Ein solcher Stahl ist besonders korrosionsbeständig.

Bei der erfindungsgemäßen Wägezelle ist wie beschrieben der Wägezellenkörper mehrteilig ausgebildet, wobei der Messabschnitt und der Lasteinleitungsabschnitt, vorzugsweise alle Lasteinleitungsabschnitte, als separate Bauteile ausgebildet sind, wobei sich der Messabschnitt und der jeweilige Lasteinleitungsabschnitt an einer jeweiligen Fügefläche berühren. Dabei sind der Lasteinleitungsabschnitt und der Messabschnitt vorzugsweise zusammengesteckt. So kann auf einfache Weise ein Wägezellenkörper vorgesehen werden, bei der Messabschnitt und mindestens einer der Lasteinleitungsabschnitte jeweils unterschiedliche Materialien aufweisen.

Für eine optimale Führung der eingeleiteten Last in Richtung des Messabschnitts, insbesondere in Richtung des Bereichs, der mit Dehnungsmessstreifen ausgestattet werden kann, ist gemäß einer weiteren Ausgestaltung der Wägezelle mit mehrteiligen Wägezellenkörper vorgesehen, dass der Lasteinleitungsabschnitt relativ zur Längsmittelachse des Messabschnitts mittels eines Zentriermittels zentriert ist. Das Zentriermittel sorgt dafür, dass der Lasteinleitungsabschnitt immer optimal zum Messabschnitt ausgerichtet ist.

Das Zentriermittel kann ein Zentrierstift sein, der durch die Längsmittelachse verläuft. Dabei kann der Zentrierstift am Lasteinleitungsabschnitt oder am Messabschnitt angeformt sein. Es ist auch denkbar, dass der Zentrierstift in einer auf der Längsmittelachse liegenden Zentrierbohrung im Lasteinleitungsabschnitt und/oder im Messabschnitt gelagert ist.

Alternativ kann das Zentriermittel auch eine Zentrierhülse sein. Die Zentrierhülse kann um den Umfang des Lasteinleitungsabschnitts und/oder des Messabschnitts angeordnet sein. Dabei ist es denkbar, dass die Zentrierhülse am Lasteinleitungsabschnitt oder am Messabschnitt angeformt ist. Insbesondere kann die Zentrierhülse als Presspassung ausgestattet sein.

Gemäß einer weiteren Alternative kann das Zentriermittel ein in axialer Richtung hervorstehender, vorzugsweise umlaufender, Zentriervorsprung sein. Der Zentriervorsprung kann dabei am Lasteinleitungsabschnitt oder am Messabschnitt angeformt sein.

Bei der Wägezelle mit mehrteiligem Wägezellenkörper ist wie beschrieben eine der Fügeflächen, also der Flächen, an denen sich Lasteinleitungsabschnitt und Messabschnitt berühren und durch die die Last geleitet wird, an einem umlaufenden und in axialer Richtung hervorstehenden Fügevorsprung ausgebildet. Mit anderen Worten, der Fügevorsprung, der vorzugsweise ringförmig ausgebildet sein kann, weist eine zum jeweils gegenüberliegenden Bauteil weisende Fügefläche auf, auf der das andere Bauteil aufliegt bzw. an der das Bauteil anliegt. Dabei kann der Fügevorsprung am Lasteinleitungsabschnitt und/oder am Messabschnitt angeformt sein.

Als besonders geeignet hat sich für das Erreichen einer hohen Reproduzierbarkeit erwiesen, wenn die Höhe des Fügevorsprungs 0,3 bis 0,7 mm, vorzugsweise 0,5 mm, beträgt. Die seitlichen Flanken des Fügevorsprungs können zumindest teilweise senkrecht und/oder winkelig zur Längsmittelachse verlaufen. Auch ist es denkbar, dass die seitlichen Flanken und/oder die Fügefläche des Fügevorsprungs einen im Querschnitt abgerundeten oder bogenförmigen Verlauf haben.

Gemäß einer weiteren Ausgestaltung der erfindungsgemäßen Wägezelle mit mehrteiligem Wägezellenkörper weist der Messabschnitt einen umlaufenden Einstich auf, der einen Übergangsabschnitt vom übrigen Messabschnitt abteilt, wobei der Übergangsabschnitt die Fügefläche aufweist, die die Fügefläche des Lasteinleitungsabschnitts berührt. Mit Hilfe eines solchen Einstichs kann am Messabschnitt ein Gegenstück, nämlich besagter Übergangsabschnitt, zum Lasteinleitungsabschnitt geschaffen werden, der sich bei geeigneter Form und Dimensionierung an die Bewegungen bzw. die Verformung des Lasteinleitungsabschnitts, die naturgemäß bei einer Lasteinleitung auftreten, anpassen.

Vorzugsweise ist dabei die Geometrie des Übergangsabschnitts, die Geometrie des benachbarten Lasteinleitungsabschnitts die Geometrie des Fügevorsprungs und/oder die Geometrie des Einstichs, insbesondere deren jeweilige Höhe und/oder deren jeweiliger Durchmesser, derart gewählt, dass bei einer Belastung entlang der Längsmittelachse, also bei besagter Krafteinleitung, keine Relativbewegung der sich berührenden Fügeflächen erfolgt. Dadurch wird erreicht, dass sich unter Last die Unterseite des Lasteinleitungsabschnitts und die Oberseite des Übergangsabschnitts des Messabschnitts in gleichem Maße verformen. Auf diese Weise werden Reibungseffekte und folglich ein Einfluss auf die Hysterese vermieden. Es sei angemerkt, dass unter Umständen ein Einfluss auf die Hysterese sogar gewünscht sein kann, um die Hysterese zu verringern. Dann können die Durchmesser, das heißt Außendurchmesser und Innendurchmesser, des ringförmigen Fügevorsprungs so gewählt werden, dass durch Relativbewegung gezielt eine Reibung und damit ein negativer Beitrag zur Hysterese entsteht.

Die mehrteilige Ausführung des Wägezellenkörpers erlaubt die stabförmige Ausbildung, insbesondere die Ausbildung und den Einsatz als Stauchstab, wodurch die Wägezelle einem breiten Einsatzspektrum zugänglich ist. Insbesondere die Anwendung in Fahrzeugwaagen, beispielsweise Lkw-Waagen, die naturgemäß in relativ großem Maße Umgebungseinflüssen wie Schmutz und Feuchtigkeit ausgesetzt sind, ist damit möglich.

Die zuvor hergeleitete und aufgezeigte Aufgabe wirdentsprechend auch bei einem Verfahren der eingangs genannten Art zur Herstellung einer Wägezelle, insbesondere einer Wägezelle, wie sie zuvor beschrieben wurde, dadurch gelöst, dass der Wägezellenkörper mehrteilig ausgebildet wird, wobei der Messabschnitt und der Lasteinleitungsabschnitt als separate Bauteile ausgebildet werden, wobei sich der Messabschnitt und der jeweilige Lasteinleitungsabschnitt an einer Fügefläche berühren, wobei eine Fügefläche an einem umlaufenden und in axialer Richtung hervorstehenden Fügevorsprung, der am Messabschnitt angeformt wird, ausgebildet wird, wobei die Fügefläche zum Lasteinleitungsabschnitt als gegenüberliegendes Bauteil weist.

Die Aufgabe wird ferner entsprechend auch bei einem Verfahren der eingangs genannten Art zur Herstellung einer Wägezelle, insbesondere einer Wägezelle, wie sie zuvor beschrieben wurde, dadurch gelöst, dass der Wegezählenkörper mehrteilig ausgebildet wird, wobei der Messabschnitt und der Lasteinleitungsabschnitt als separate Bauteile ausgebildet werden, wobei sich der Messabschnitt und der jeweilige Lasteinleitungsabschnitt an einer Fügefläche berühren, wobei eine Fügefläche an einem umlaufenden und in axialer Richtung hervorstehenden Fügevorsprung, der am Lasteinleitungsabschnitt angeformt wird, ausgebildet wird, wobei die Fügefläche zum Messabschnitt als gegenüberliegendes Bauteil weist.

Gemäß einer Ausgestaltung des erfindungsgemäßen Verfahrens werden der Messabschnitt und der Lasteinleitungsabschnitt, vorzugsweise alle Lasteinleitungsabschnitte, jeweils aus einem entsprechenden, vorzugsweise zylindrischen, Rohling gefertigt. Mit anderen Worten, jeder Abschnitt wird aus einem separaten Rohling gefertigt, wobei jeder Rohling das für diesen jeweiligen Abschnitt optimale Material aufweist.

Es gibt nun eine Vielzahl von Möglichkeiten, die erfindungsgemäße Wägezelle und das erfindungsgemäße Verfahren auszugestalten und weiterzubilden. Hierzu wird beispielsweise verwiesen einerseits auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: eine Schnittansicht eines Ausführungsbeispiels einer Wägezelle gemäß der vorliegenden Erfindung,
- Fig. 2a) bis e): eine Schnittansicht alternativer Ausführungsbeispiele einer Wägezelle gemäß der vorliegenden Erfindung und
- Fig. 3: eine Prinzipdarstellung der Wägezelle aus Fig. 1 unter Last.

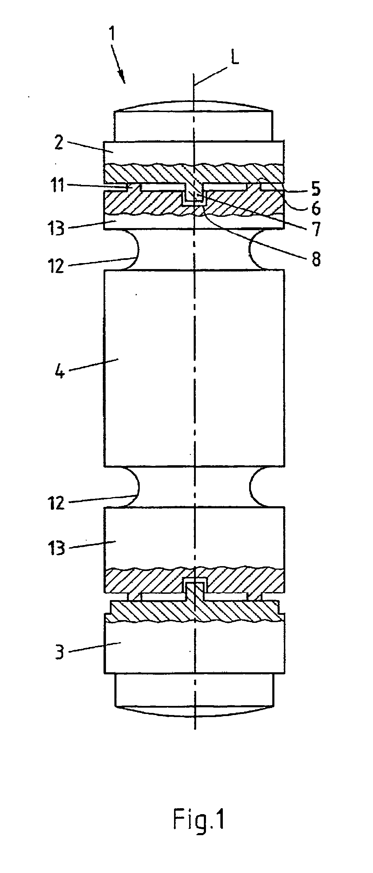

Fig. 1 zeigt in einem Schnitt entlang der Längsachse L den Wägezellenkörper 1 einer Wägezelle, wobei der Wägezellenkörper 1 einen ersten Lasteinleitungsabschnitt 2 im Kopfbereich der Wägezelle, einen zweiten Lasteinleitungabschnitt 3 im Fußbereich der Wägezelle und einen zwischen den beiden Lasteinleitungsabschnitten 2 und 3 angeordneten Messabschnitt 4 aufweist.

Der Messabschnitt 4 einerseits und die beiden Lasteinleitungsabschnitte 2 und 3 andererseits weisen jeweils unterschiedliche Materialien auf. Im vorliegenden Fall unterscheiden sich die beiden Materialien, bei denen es sich in beiden Fällen um Stahl handelt, dadurch, dass der Stahl der Lasteinleitungsabschnitte 2 und 3 ein nichtrostender Edelstahl mit einem Massenanteil von Chrom von mehr als 13 Gew.% ist. Die Korrosionsbeständigkeit dieses Stahls ist höher als die des Stahls X5CrNiCuNb16-4 mit der Werkstoffnummer 1.4542. Auf diese Weise haben die Lasteinleitungsabschnitte 2 und 3 eine optimale Korrosionsbeständigkeit und können daher ohne weiteres den bei Fahrzeugwaagen üblichen Umwelt- und Witterungseinflüssen ausgesetzt werden.

Das Material des Messabschnitts 4 weist dagegen eine deutlich geringere Korrosionsbeständigkeit als das Material der Lasteinleitungsabschnitte 2 und 3 auf, ist aber so gewählt, dass es optimale messtechnische Eigenschaften, insbesondere eine gute Linearität, Hysterese und Kriechen, aufweist.

Werden nun der Messabschnitt 4 und die beiden Lasteinleitungsabschnitte 2 und 3 wie dargestellt zusammengesteckt, wodurch ein mehrteiliger Wägezellenkörper 1 gebildet wird, erhält man eine Wägezelle, die abschnittsweise eine optimale Korrosionsbeständigkeit und abschnittsweise optimale messtechnische Eigenschaften aufweist.

Zur Zentrierung und axialen Führung der Lasteinleitungsabschnitte 2 und 3 relativ zum Messabschnitt 4 sind Zentriermittel in Form eines Zentrierstifts 7 vorgesehen, der jeweils durch die Längsmittelachse L verläuft. Dabei ist im in Fig. 1 dargestellten Fall der Zentrierstift 7 jeweils am Lasteinleitungsabschnitt 2 bzw. 3 angeformt.

Der Messabschnitt 4 weist zwei Einstiche 12 auf, die jeweils einen oberen und einen unteren Übergangsabschnitt 13 vom übrigen Messabschnitt 4 abteilen, wobei der Übergangsabschnitt 13 als ein Abschnitt dient, der mit dem jeweiligen Lasteinleitungsabschnitt 2 bzw. 3 zusammenwirkt.

Der Übergangsabschnitt 13 weist jeweils eine Zentrierbohrung 8 auf, in die der Zentrierstift 7 eingeführt ist. Dabei ist zwischen der Stirnseite des Zentrierstifts 7 und dem Boden der Zentrierbohrung 8 ein gewisser Spalt vorgesehen, der bei Lasteinleitung und der damit einhergehenden Verformung des Lasteinleitungsabschnitts 2 bzw. 3 verhindert, dass der Zentrierstift 7 in axialer Richtung die Bohrung 8, also ihren Boden, berührt, was zu einer Verfälschung des Messergebnisses führen kann.

Ferner ist ein ringförmiger, in Umfangsrichtung umlaufender und in axialer Richtung hervorstehender Fügevorsprung 11 am Messabschnitt 4 angeformt, wobei der Fügevorsprung 11 stirnseitig eine Fügefläche 6 ausbildet, die ebenfalls ringförmig ist. Die Fügefläche 6 des Messabschnitts 4 liegt an der ebenen Unterseite des jeweiligen Lasteinleitungsabschnitts 2 bzw. 3 an, die die Fügefläche 5 des Lasteinleitungsabschnitts bildet.

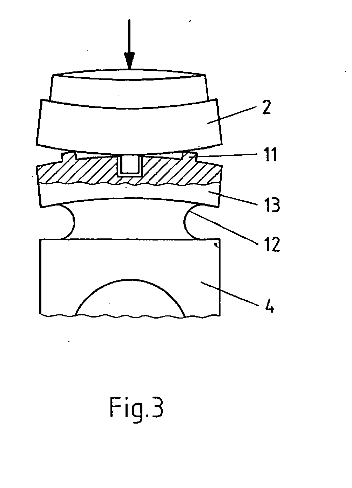

Dabei ist die Geometrie des Übergangsabschnitts 13 und die Geometrie des benachbarten Lasteinleitungsabschnitts 2 bzw. 3 derart gewählt, dass bei einer Belastung entlang der Mittelachse L keine Relativbewegung der sich berührenden Fügeflächen 5 und 6 erfolgt. Dies wird später noch anhand von Fig. 3 näher erläutert.

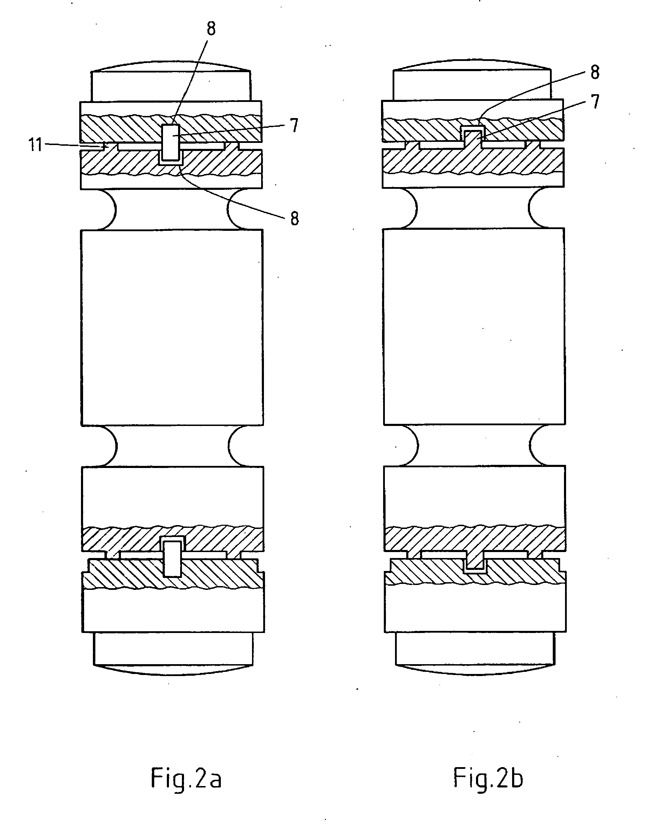

Die Figuren 2a) bis e) zeigen in einer Schnittansicht verschiedene alternative Ausführungsbeispiele, deren grundsätzlicher Aufbau und Funktionsprinzip mit dem Ausführungsbeispiel aus Fig. 1 übereinstimmt.

Die Wägezellenkörper in den Figuren 2a) bis e) unterscheiden sich von dem Wägezellenkörper 1 in Fig. 1 lediglich dadurch, dass die Zentriermittel anders ausgebildet sind und teilweise auch der Fügevorsprung 11 anders angeordnet ist.

In Fig. 2a) ist als Zentriermittel ebenfalls ein Zentrierstift 7 vorgesehen, der durch die Längsmittelachse L verläuft. In diesem Fall ist der Zentrierstift 7 jedoch weder am Lasteinleitungsabschnitt 2 bzw. 3, noch am Messabschnitt 4 angeformt, sondern stellt ein separates bolzenförmiges Bauteil dar. Zur Aufnahme des Zentrierstifts 7 ist je eine Zentrierbohrung 8 im Messabschnitt 4 und im Lasteinleitungsabschnitt 2 bzw. 3 vorgesehen.

Ein weiterer Unterschied des Ausführungsbeispiels aus Fig. 2a) zum Ausführungsbeispiel aus Fig. 1 ist, dass der ringförmige Fügevorsprung 11 jeweils am Lasteinleitungsabschnitt 2 bzw. 3 angeformt ist.

Das Ausführungsbeispiel in Fig. 2b) unterscheidet sich vom Ausführungsbeispiel in Fig. 1 lediglich dadurch, dass die Lage von Zentrierstift 7 und Zentrierbohrung 8 vertauscht sind. Mit anderen Worten, der Zentrierstift 7 ist am Messabschnitt 4 angeformt, während die Zentrierbohrung 8 am Lasteinleitungsabschnitt 2 bzw. 3 eingebracht ist.

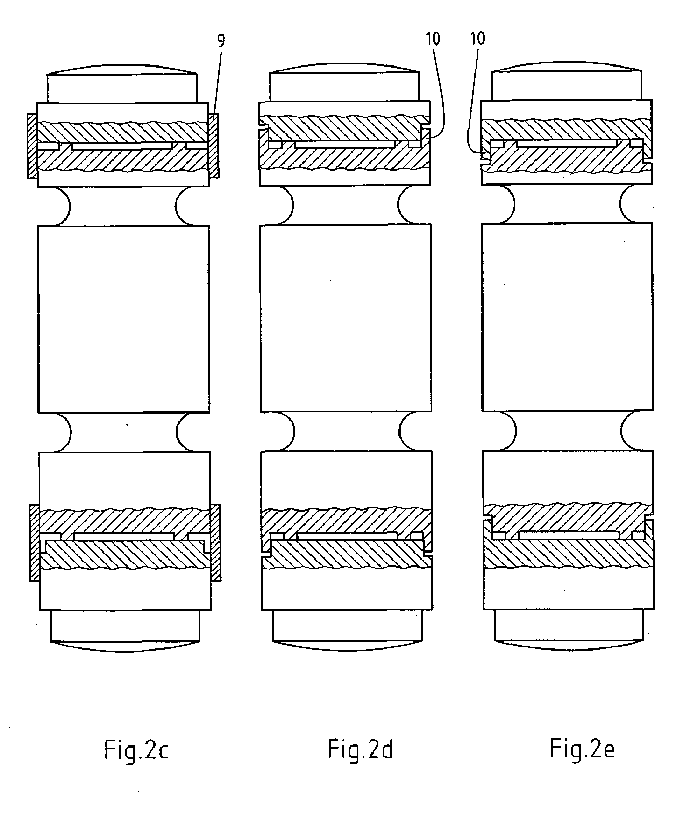

Die Ausführungsbeispiele in den Figuren 2c) bis e) verzichten auf einen Zentrierstift und eine entsprechende Zentrierbohrung. Hier sind alternative Zentriermittel vorgesehen.

In Fig. 2c) ist als Zentriermittel eine Zentrierhülse 9 vorgesehen, die um den Umfang des Lasteinleitungsabschnitts 2 bzw. 3 sowie um den Umfang des Messabschnitts 4 angeordnet ist und am Messabschnitt 4 und den Lasteinleitungsabschnitten 2 und 3 kraftschlüssig anliegt.

In Fig. 2d) ist als Zentriermittel ein in axialer Richtung vorstehender, umlaufender Zentriervorsprung 10 am Messabschnitt 4 angeformt. Der Innendurchmesser des Zentriervorsprungs 10 entspricht dabei dem Außendurchmesser des jeweiligen Lasteinleitungsabschnitts 2 bzw. 3, so dass der Lasteinleitungsabschnitt 2 bzw. 3 nach dem Zusammenstecken mit dem Messabschnitt 4 an der inneren Flanke des Zentriervorsprungs 10 zur Anlage kommt.

Beim Ausführungsbeispiel gemäß Fig. 2e) ist als Zentriermittel ebenfalls ein in axialer Richtung hervorstehender, umlaufender Zentriervorsprung 10 vorgesehen, der diesmal im Unterschied zum Ausführungsbeispiel in Fig. 2d) am Lasteinleitungsabschnitt 2 bzw. 3 angeformt ist. In diesem Fall ist der Innendurchmesser des Zentriervorsprungs 10 so gewählt, dass beim Zusammenstecken von Lasteinleitungsabschnitt 2 bzw. 3 und Messabschnitt 4 ein Abschnitt der Außenseite des Messabschnitts 4 an der inneren Flanke des Zentriervorsprungs 10 zur Anlage kommt.

Fig. 3 zeigt schematisch und in übertriebenem Maße die bei Lasteinleitung auftretenden Verformungen des Lasteinleitungsabschnitts 2 und des Übergangsabschnitts 13, welcher durch den Einstich 12 vom übrigen Messabschnitt 4 abgeteilt ist.

Aufgrund der besonderen Geometrie von Lasteinleitungsabschnitt 2 und Übergangsabschnitt 13 einschließlich Fügevorsprung 11 entsteht durch die mittels eines Pfeils dargestellte Kraft nicht nur eine Durchbiegung des Lasteinleitungsabschnitts 2 und eine entgegengesetzte Durchbiegung des Übergangsabschnitts 13, sondern auch die die Fügeflächen 5 und 6 aufweisenden Bereiche bewegen sich ebenfalls in radialer Richtung nach außen.

Dabei ist die Geometrie der zusammenwirkenden Bauteile so gewählt, dass sich die Fügeflächen 5 und 6 in gleichem Maße radial nach außen bewegen. Dies wird unter anderem dadurch erreicht, dass die Höhe des Lasteinleitungsabschnitts 2 und der Durchmesser des Fügevorsprungs 11 aufeinander abgestimmt werden. Weitere bei der Abstimmung zu berücksichtigenden Einflussgrößen sind im vorliegenden Fall die Höhe des Übergangsabschnitts 13 sowie die Tiefe und Form des Einstichs 12. Durch die besondere Geometrie findet an den Fügeflächen keine Relativbewegung statt, so dass auch keine Reibung auftritt, die einen ungewollten Einfluss auf die Hysterese, Linearität und Reproduzierbarkeit haben kann. Dies ermöglicht den Einsatz von hochgenauen Wägezellen.

## Patentansprüche

1. Wägezelle mit einem einen Stauchstab bildenden Wägezellenkörper (1), umfassend:
- einen ersten Lasteinleitungsabschnitt (2),
- einen zweiten Lasteinleitungsabschnitt (3), und
- einen Messabschnitt (4), der koaxial zwischen dem ersten Lasteinleitungsabschnitt (2) und dem zweiten Lasteinleitungsabschnitt (3) angeordnet ist,
- wobei der Messabschnitt (4) und mindestens einer der Lasteinleitungsabschnitte (2,3) jeweils unterschiedliche Materialien aufweisen,
**dadurch gekennzeichnet, dass** der Wägezellenkörper (1) mehrteilig ausgebildet ist, wobei der Messabschnitt (4) und der Lasteinleitungsabschnitt (2;3) als separate Bauteile ausgebildet sind, wobei sich der Messabschnitt (4) und der jeweilige Lasteinleitungsabschnitt (2;3) an einer Fügefläche (5;6) berühren, wobei die Fügefläche (6) an einem umlaufenden und in axialer Richtung hervorstehenden Fügevorsprung (11), der am Messabschnitt (4) angeformt ist, ausgebildet ist, wobei die Fügefläche (6) zum Lasteinleitungsabschnitt (2;3) als gegenüberliegendes Bauteil weist.

2. Wägezelle mit einem einen Stauchstab bildenden Wägezellenkörper (1), umfassend:
- einen ersten Lasteinleitungsabschnitt (2),
- einen zweiten Lasteinleitungsabschnitt (3), und
- einen Messabschnitt (4), der koaxial zwischen dem ersten Lasteinleitungsabschnitt (2) und dem zweiten Lasteinleitungsabschnitt (3) angeordnet ist,
wobei der Messabschnitt (4) und mindestens einer der Lasteinleitungsabschnitte (2,3) jeweils unterschiedliche Materialien aufweisen,
**dadurch gekennzeichnet, dass** der Wägezellenkörper (1) mehrteilig ausgebildet ist, wobei der Messabschnitt (4) und der Lasteinleitungsabschnitt (2;3) als separate Bauteile ausgebildet sind, wobei sich der Messabschnitt (4) und der jeweilige Lasteinleitungsabschnitt (2;3) an einer Fügefläche (5;6) berühren, wobei die Fügefläche (5) an einem umlaufenden und in axialer Richtung hervorstehenden Fügevorsprung (11), der am Lasteinleitungsabschnitt (2;3) angeformt ist, ausgebildet ist, wobei die Fügefläche (5) zum Messabschnitt (4) als gegenüberliegendes Bauteil weist.

3. Wägezelle nach Anspruch 1 oder 2, **dadurch gekennzeichnet, dass** der Messabschnitt (4) zumindest teilweise, vorzugsweise vollständig, aus einem ersten Metall und der Lasteinleitungsabschnitt (2;3) zumindest teilweise, vorzugsweise vollständig, aus einem zweiten Metall besteht.

4. Wägezelle nach Anspruch 3, **dadurch gekennzeichnet, dass** die Korrosionsbeständigkeit des zweiten Metalls höher als die des ersten Metalls ist.

5. Wägezelle nach Anspruch 3 oder 4, **dadurch gekennzeichnet, dass** die Korrosionsbeständigkeit des zweiten Metalls höher als die des Stahls X5CrNiCuNb16-4 ist.

6. Wägezelle nach einem der Ansprüche 3 bis 5, **dadurch gekennzeichnet, dass** das zweite Metall ein Stahl, vorzugsweise ein Edelstahl, ist.

7. Wägezelle nach Anspruch 6, **dadurch gekennzeichnet, dass** der Stahl ein nichtrostender Stahl ist.

8. Wägezelle nach Anspruch 7, **dadurch gekennzeichnet, dass** der Stahl einen Massenanteil von Chrom von mindestens 10,5 Gew.%, vorzugweise von mindestens 15 Gew.%, aufweist.

9. Wägezelle nach einem der Ansprüche 1 bis 8, **dadurch gekennzeichnet, dass** der Lasteinleitungsabschnitt (2;3) und der Messabschnitt (4) zusammengesteckt sind.

10. Wägezelle nach einem der Ansprüche 1 bis 9, **dadurch gekennzeichnet, dass** der Lasteinleitungsabschnitt (2;3) relativ zur Längsmittelachse (L) des Messabschnitts (4) mittels eines Zentriermittels zentriert ist.

11. Wägezelle nach Anspruch 10, **dadurch gekennzeichnet, dass** das Zentriermittel ein Zentrierstift (7) ist, der durch die Längsmittelachse (L) verläuft.

12. Wägezelle nach Anspruch 11, **dadurch gekennzeichnet, dass** der Zentrierstift (7) am Lasteinleitungsabschnitt (2;3) oder am Messabschnitt (4) angeformt ist.

13. Wägezelle nach Anspruch 11 oder 12, **dadurch gekennzeichnet, dass** der Zentrierstift (7) in einer auf der Längsmittelachse (L) liegenden Zentrierbohrung (8) im Lasteinleitungsabschnitt (2;3) und/oder im Messabschnitt (4) gelagert ist.

14. Wägezelle nach Anspruch 10, **dadurch gekennzeichnet, dass** das Zentriermittel eine Zentrierhülse (9) ist.

15. Wägezelle nach Anspruch 14, **dadurch gekennzeichnet, dass** die Zentrierhülse (9) um den Umfang des Lasteinleitungsabschnitts (2;3) und/oder des Messabschnitts (4) angeordnet ist.

16. Wägezelle nach Anspruch 14 oder 15, **dadurch gekennzeichnet, dass** die Zentrierhülse (9) am Lasteinleitungsabschnitt (2;3) oder am Messabschnitt (4) angeformt ist.

17. Wägezelle nach Anspruch 10, **dadurch gekennzeichnet, dass** das Zentriermittel ein in axialer Richtung hervorstehender, vorzugsweise umlaufender, Zentriervorsprung (10) ist.

18. Wägezelle nach Anspruch 17, **dadurch gekennzeichnet, dass** der Zentriervorsprung (10) am Lasteinleitungsabschnitt (2;3) oder am Messabschnitt (4) angeformt ist.

19. Wägezelle nach einem der Ansprüche 1 bis 18, **dadurch gekennzeichnet, dass** der Fügevorsprung (11) ringförmig ist.

20. Wägezelle nach einem der Ansprüche 1 bis 19, **dadurch gekennzeichnet, dass** die Höhe des Fügevorsprungs (11) 0,3 bis 0,7 mm, vorzugsweise 0,5 mm, beträgt.

21. Wägezelle nach einem der Ansprüche 1 bis 20, **dadurch gekennzeichnet, dass** die seitlichen Flanken des Fügevorsprungs (11) zumindest teilweise senkrecht und/oder winkelig zur Längsmittelachse (L) verlaufen.

22. Wägezelle nach einem der Ansprüche 1 bis 21, **dadurch gekennzeichnet, dass** die seitlichen Flanken und/oder die Fügefläche (6) einen im Querschnitt abgerundeten oder bogenförmigen Verlauf haben.

23. Wägezelle nach einem der Ansprüche 1 bis 22, **dadurch gekennzeichnet, dass** der Messabschnitt (4) einen umlaufenden Einstich (12) aufweist, der einen Übergangsabschnitt (13) vom übrigen Messabschnitt (4) abteilt, wobei der Übergangsabschnitt (13) die Fügefläche (6) aufweist, die die Fügefläche (5) des Lasteinleitungsabschnitts (2;3) berührt.

24. Wägezelle nach Anspruch 23, **dadurch gekennzeichnet, dass** die Geometrie des Übergangsabschnitts (13), die Geometrie des benachbarten Lasteinleitungsabschnitts (2;3) die Geometrie des Zentriervorsprungs (10) und/oder die Geometrie des Einstichs (12), insbesondere deren jeweilige Höhe und/oder deren jeweiliger Durchmesser, derart gewählt sind, dass bei einer Belastung entlang der Längsmittelachse (L) keine Relativbewegung der sich berührenden Fügeflächen (5,6) erfolgt.

25. Verfahren zur Herstellung einer Wägezelle, insbesondere einer Wägezelle nach einem der vorangehenden Ansprüche, mit einem einen Stauchstab bildenden Wägezellenkörper (1), umfassend einen ersten Lasteinleitungsabschnitt (2), einen zweiten Lasteinleitungsabschnitt (3) und einen koaxial zwischen dem ersten Lasteinleitungsabschnitt (2) und dem zweiten Lasteinleitungsabschnitt (3) angeordneten Messabschnitt (4), wobei der Messabschnitt (4) und mindestens einer der Lasteinleitungsabschnitte (2,3) jeweils unterschiedliche Materialien aufweisen, **dadurch gekennzeichnet, dass** der Wägezellenkörper (1) mehrteilig ausgebildet wird, wobei der Messabschnitt (4) und der Lasteinleitungsabschnitt (2;3) als separate Bauteile ausgebildet werden, wobei sich der Messabschnitt (4) und der jeweilige Lasteinleitungsabschnitt (2;3) an einer Fügefläche (5;6) berühren, wobei die Fügefläche (6) an einem umlaufenden und in axialer Richtung hervorstehenden Fügevorsprung (11), der am Messabschnitt (4) angeformt wird, ausgebildet wird, wobei die Fügefläche (6) zum Lasteinleitungsabschnitt (2;3) als gegenüberliegendes Bauteil weist.

26. Verfahren zur Herstellung einer Wägezelle, insbesondere einer Wägezelle nach einem der Ansprüche 1 bis 24, mit einem einen Stauchstab bildenden Wägezellenkörper (1), umfassend einen ersten Lasteinleitungsabschnitt (2), einen zweiten Lasteinleitungsabschnitt (3) und einen koaxial zwischen dem ersten Lasteinleitungsabschnitt (2) und dem zweiten Lasteinleitungsabschnitt (3) angeordneten Messabschnitt (4), wobei der Messabschnitt (4) und mindestens einer der Lasteinleitungsabschnitte (2,3) jeweils unterschiedliche Materialien aufweisen, **dadurch gekennzeichnet, dass** der Wägezellenkörper (1) mehrteilig ausgebildet wird, wobei der Messabschnitt (4) und der Lasteinleitungsabschnitt (2;3) als separate Bauteile ausgebildet werden, wobei sich der Messabschnitt (4) und der jeweilige Lasteinleitungsabschnitt (2;3) an einer Fügefläche (5;6) berühren, wobei die Fügefläche (5) an einem umlaufenden und in axialer Richtung hervorstehenden Fügevorsprung (11), der am Lasteinleitungsabschnitt (2;3) angeformt wird, ausgebildet wird, wobei die Fügefläche (5) zum Messabschnitt (4) als gegenüberliegendes Bauteil weist.

27. Verfahren nach Anspruch 25 oder 26, **dadurch gekennzeichnet, dass** der Messabschnitt (4) und der Lasteinleitungsabschnitt (2;3), vorzugsweise alle Lasteinleitungsabschnitte (2,3), jeweils aus einem entsprechenden, vorzugsweise zylindrischen, Rohling (14,15,16) gefertigt werden.

## Claims

1. A load cell with a load cell body (1) forming a compression rod, comprising:
- a first load application section (2),
- a second load application section (3), and
- a measurement section (4) arranged coaxially between the first load application section (2) and second load application section (3),
- wherein the measurement section (4) and at least one of the load application sections (2, 3) each exhibit different materials,
**characterized in that** the load cell body (1) consists of several parts, wherein the measurement section (4) and the load application section (2; 3) are formed as separate components, wherein the measurement section (4) and the respective load application section (2; 3) contact each other on a joining surface (5; 6), wherein the joining surface (6) is formed on a circumferential joining projection (11) that protrudes in an axial direction and is integrally formed at the measurement section (4), wherein the joining surface (6) faces the load application section (2; 3) as an opposing component.

2. A load cell with a load cell body (1) forming a compression rod, comprising:
- a first load application section (2),
- a second load application section (3), and
- a measurement section (4) arranged coaxially between the first load application section (2) and second load application section (3),
- wherein the measurement section (4) and at least one of the load application sections (2, 3) each exhibit different materials,
**characterized in that** the load cell body (1) consists of several parts, wherein the measurement section (4) and the load application section (2; 3) are formed as separate components, wherein the measurement section (4) and the respective load application section (2; 3) contact each other on a joining surface (5; 6), wherein the joining surface (5) is formed on a circumferential joining projection (11) that protrudes in an axial direction and is integrally formed at the load application section (2; 3), wherein the joining surface (5) faces the measurement section (4) as an opposing component.

3. The load cell according to claim 1 or 2, **characterized in that** the measurement section (4) consists at least partially, preferably entirely, of a first metal, and the load application section (2; 3) consists at least partially, preferably entirely, of a second metal.

4. The load cell according to claim 3, **characterized in that** the corrosion resistance of the second metal is higher than that of the first metal.

5. The load cell according to claim 3 or 4, **characterized in that** the corrosion resistance of the second metal is higher than that of the X5CrNiCuNb16-4 steel.

6. The load cell according to one of claims 3 to 5, **characterized in that** the second metal is steel, preferably high-grade steel.

7. The load cell according to claim 6, **characterized in that** the steel is a stainless steel.

8. The load cell according to claim 7, **characterized in that** the steel has a percent by weight of chromium measuring at least 10,5 % by wght, preferably at least 15 % by wght.

9. The load cell according to one of claims 1 to 8, **characterized in that** the load application section (2; 3) and the measurement section (4) are plugged together.

10. The load cell according to one of claims 1 to 9, **characterized in that** the load application section (2; 3) is centered relative to the longitudinal center axis (L) of the measurement section (4) via a centering means.

11. The load cell according to claim 10, **characterized in that** the centering means is a centering pin (7), which runs through the longitudinal center axis (L).

12. The load cell according to claim 11, **characterized in that** the centering pin (7) is integrally formed at the load application section (2; 3) or measurement section (4).

13. The load cell according to claim 11 or 12, **characterized in that** the centering pin (7) is mounted in a centering borehole (8) lying on the longitudinal center axis (L) in the load application section (2; 3) and/or measurement section (4).

14. The load cell according to claim 10, **characterized in that** the centering means is a centering sleeve (9).

15. The load cell according to claim 14, **characterized in that** the centering sleeve (9) is arranged around the periphery of the load application section (2; 3) and/or measurement section (4).

16. The load cell according to claim 14 or 15, **characterized in that** the centering sleeve (9) is integrally formed at the load application section (2; 3) or measurement section (4).

17. The load cell according to claim 10, **characterized in that** the centering means is a, preferably circumferential, centering projection (10) that protrudes in an axial direction.

18. The load cell according to claim 17, **characterized in that** the centering projection (10) is integrally formed at the load application section (2; 3) or measurement section (4).

19. The load cell according to one of claims 1 to 18, **characterized in that** the joining projection (11) is annular.

20. The load cell according to one of claims 1 to 19, **characterized in that** the height of the joining projection (11) measures 0,3 to 0,7 mm, preferably 0,5 mm.

21. The load cell according to one of claims 1 to 20, **characterized in that** the lateral flanks of the joining projection (11) run at least in part perpendicular and/or at an angle relative to the longitudinal center axis (L).

22. The load cell according to one of claims 1 to 21, **characterized in that** the lateral flanks and/or joining surface (6) exhibit a cross sectionally rounded or arced shape.

23. The load cell according to one of claims 1 to 22, **characterized in that** the measurement section (4) exhibits a circumferential recess (12), which separates a transitional section (13) from the remaining measurement section (4), wherein the transitional section (13) exhibits the joining surface (6), which contacts the joining surface (5) of the load application section (2; 3).

24. The load cell according to claim 23, **characterized in that** the geometry of the transitional section (13), the geometry of the adjacent load application section (2; 3), the geometry of the centering projection (10) and/or the geometry of the recess (12), in particular its respective height and/or its respective diameter, are selected in such a way that no relative motion of the contacting joining surfaces (5, 6) takes during an exposure along the longitudinal center axis (L).

25. A method for manufacturing a load cell, in particular a load cell according to one of the preceding claims, with a load cell body (1) forming a compression rod, comprising a first load application section (2), a second load application section (3), and a measurement section (4) arranged coaxially between the first load application section (2) and second load application section (3), wherein the measurement section (4) and at least one of the load application sections (2, 3) each exhibit different materials, **characterized in that** the load cell body (1) is formed in several parts, wherein the measurement section (4) and the load application section (2; 3) are formed as separate components, wherein the measurement section (4) and the respective load application section (2; 3) contact each other on a joining surface (5; 6), wherein the joining surface (6) is formed on a circumferential joining projection (11) that protrudes in an axial direction and is integrally formed at the measurement section (4), wherein the joining surface (6) faces the load application section (2; 3) as an opposing component.

26. A method for manufacturing a load cell, in particular a load cell according to one of claims 1 to 24, with a load cell body (1) forming a compression rod, comprising a first load application section (2), a second load application section (3), and a measurement section (4) arranged coaxially between the first load application section (2) and second load application section (3), wherein the measurement section (4) and at least one of the load application sections (2, 3) each exhibit different materials, **characterized in that** the load cell body (1) is formed in several parts, wherein the measurement section (4) and the load application section (2; 3) are formed as separate components, wherein the measurement section (4) and the respective load application section (2; 3) contact each other on a joining surface (5; 6), wherein the joining surface (5) is formed on a circumferential joining projection (11) that protrudes in an axial direction and is integrally formed at the load application section (2; 3), wherein the joining surface (5) faces the measurement section (4) as an opposing component.

27. The method according to claim 25 or 26, **characterized in that** the measurement section (4) and the load application section (2; 3), preferably all load application sections (2; 3), are each made out of a corresponding, preferably cylindrical, blank (14, 15, 16).

## Revendications

1. Cellule de pesage avec un corps de cellule de pesage (1) formant une baguette de refoulement, comprenant :
- une première section d'introduction de charge (2),
- une deuxième section d'introduction de charge (3), et
- une section de mesure (4) agencée coaxialement entre la première section d'introduction de charge (2) et la deuxième section d'introduction de charge (3),
- dans laquelle la section de mesure (4) et au moins l'une des sections d'introduction de charge (2, 3) est respectivement constituée de matériaux différents,
**caractérisée en ce que** le corps de cellule de pesage (1) est conçu en plusieurs pièces, la section de mesure (4) et la section d'introduction de charge (2; 3) étant conçues comme des pièces séparées, où la section de mesure (4) et chaque section d'introduction de charge (2; 3) se touchent sur une surface de jonction (5; 6), la surface de jonction (6) étant formée sur une saillie de jonction (11) périphérique faisant saillie vers l'avant dans la direction axiale, formée sur la section de mesure (4), la surface de jonction (6) étant dirigée vers la section d'introduction de charge (2; 3) en tant que pièce opposée.

2. Cellule de pesage avec un corps de cellule de pesage (1) formant une baguette de refoulement, comprenant :
- une première section d'introduction de charge (2),
- une deuxième section d'introduction de charge (3), et
- une section de mesure (4) agencée coaxialement entre la première section d'introduction de charge (2) et la deuxième section d'introduction de charge (3), la section de mesure (4) et au moins l'une des sections d'introduction de charge (2, 3) étant constituées de matériaux différents,
**caractérisée en ce que** le corps de cellule de pesage (1) est conçu en plusieurs pièces, la section de mesure (4) et la section d'introduction de charge (2; 3) étant conçues comme des pièces séparées, où la section de mesure (4) et chaque section d'introduction de charge (2; 3) se touchent sur une surface de jonction (5; 6), la surface de jonction (5) étant formée sur une saillie de jonction (11) périphérique faisant saillie vers l'avant dans la direction axiale, formée sur la section d'introduction de charge (2; 3), la surface de jonction (5) étant dirigée vers la section de mesure (4) en tant que pièce opposée.

3. Cellule de pesage selon la revendication 1 ou 2, **caractérisée en ce que** la section de mesure (4) est constituée au moins partiellement, de préférence entièrement, d'un premier métal, et la section d'introduction de charge (2; 3) est constituée au moins partiellement, de préférence entièrement, d'un deuxième métal.

4. Cellule de pesage selon la revendication 3, **caractérisée en ce que** la résistance à la corrosion du deuxième métal est supérieure à celle du premier métal.

5. Cellule de pesage selon la revendication 3 ou 4, **caractérisée en ce que** la résistance à la corrosion du deuxième métal est supérieure à celle de l'acier X5CrNiCuNb16-4.

6. Cellule de pesage selon l'une des revendications 3 à 5, **caractérisée en ce que** le deuxième métal est un acier, de préférence un acier fin.

7. Cellule de pesage selon la revendication 6, **caractérisée en ce que** l'acier est un acier inoxydable.

8. Cellule de pesage selon la revendication 7, **caractérisée en ce que** l'acier comporte une proportion massique de chrome d'au moins 10,5% en poids, de préférence d'au moins 15% en poids.

9. Cellule de pesage selon l'une des revendications 1 à 8, **caractérisée en ce que** la section d'introduction de charge (2; 3) et la section de mesure (4) sont emboîtées.

10. Cellule de pesage selon l'une des revendications 1 à 9, **caractérisée en ce que** la section d'introduction de charge (2; 3) est centrée par rapport à l'axe médian longitudinal (L) de la section de mesure (4), à l'aide d'un moyen de centrage.

11. Cellule de pesage selon la revendication 10, **caractérisée en ce que** le moyen de centrage est une tige de centrage (7) s'étendant à travers l'axe médian longitudinal (L).

12. Cellule de pesage selon la revendication 11, **caractérisée en ce que** la tige de centrage (7) est formée sur la section d'introduction de charge (2; 3) ou sur la section de mesure (4).

13. Cellule de pesage selon la revendication 11 ou 12, **caractérisée en ce que** la tige de centrage (7) est montée dans un alésage de centrage (8) situé sur l'axe médian longitudinal (L) dans la section d'introduction de charge (2 ; 3) et/ou dans la section de mesure (4).

14. Cellule de pesage selon la revendication 10, **caractérisée en ce que** le moyen de centrage est une douille de centrage (9).

15. Cellule de pesage selon la revendication 14, **caractérisée en ce que** la douille de centrage (9) est agencée autour du pourtour de la section d'introduction de charge (2; 3) et/ou de la section de mesure (4).

16. Cellule de pesage selon la revendication 14 ou 15, **caractérisée en ce que** la douille de centrage (9) est formée sur la section d'introduction de charge (2; 3) ou sur la section de mesure (4).

17. Cellule de pesage selon la revendication 10, **caractérisée en ce que** le moyen de centrage est une saillie de centrage (10) de préférence périphérique, faisant saillie dans la direction axiale.

18. Cellule de pesage selon la revendication 17, **caractérisée en ce que** la saillie de centrage (10) est formée sur la section d'introduction de charge (2; 3) ou sur la section de mesure (4).

19. Cellule de pesage selon l'une des revendications 1 à 18, **caractérisée en ce que** la saillie de jonction (11) est annulaire.

20. Cellule de pesage selon l'une des revendications 1 à 19, **caractérisée en ce que** la hauteur de la saillie de jonction (11) mesure de 0,3 à 0,7 mm, de préférence 0,5 mm.

21. Cellule de pesage selon l'une des revendications 1 à 20, **caractérisée en ce que** les bords latéraux de la saillie de jonction (11) s'étendent au moins partiellement perpendiculairement et/ou en formant un angle par rapport à l'axe médian longitudinal (L).

22. Cellule de pesage selon l'une des revendications 1 à 21, **caractérisée en ce que** les bords latéraux et/ou la surface de jonction (6) présentent une section transversale à parcours arrondi ou arqué.

23. Cellule de pesage selon l'une des revendications 1 à 22, **caractérisée en ce que** la section de mesure (4) comporte une encoche (12) séparant une section de transition (13) du reste de la section de mesure (4), la section de transition (13) comportant la surface de jonction (6) touchant la surface de jonction (5) de la section d'introduction de charge (2; 3).

24. Cellule de pesage selon la revendication 23, **caractérisée en ce que** la géométrie de la section de transition (13), la géométrie de la section d'introduction de charge (2; 3) voisine, la géométrie de la saillie de centrage (10) et/ou la géométrie de l'encoche (12), en particulier leur hauteur et/ou leur diamètre respectif, sont choisis telle manière qu'en présence d'une charge le long de l'axe médian longitudinal (L), aucun mouvement relatif des surfaces de jonction (5, 6) en contact l'une avec l'autre ne se produit.

25. Procédé pour la fabrication d'une cellule de pesage, en particulier une cellule de pesage selon l'une des revendications précédentes, avec un corps de cellule de pesage (1) formant une baguette de refoulement, comprenant une première section d'introduction de charge (2), une deuxième section d'introduction de charge (3), et une section de mesure (4) agencée coaxialement entre la première section d'introduction de charge (2) et la deuxième section d'introduction de charge (3), dans laquelle la section de mesure (4) et au moins l'une des sections d'introduction de charge (2, 3) est respectivement constituée de matériaux différents, **caractérisé en ce que** le corps de cellule de pesage (1) est formé en plusieurs pièces, la section de mesure (4) et la section d'introduction de charge (2; 3) sont formeées comme des pièces séparées, où la section de mesure (4) et la section d'introduction de charge (2; 3) respective se touchent sur une surface de jonction (5; 6), la surface de jonction (6) est formée sur une saillie de jonction (11) périphérique faisant saillie vers l'avant dans la direction axiale, formée sur la section de mesure (4), la surface de jonction (6) étant dirigée vers la section d'introduction de charge (2; 3) en tant que pièce opposée.

26. Procédé pour la fabrication d'une cellule de pesage, en particulier une cellule de pesage selon l'une des revendications 1 à 24, avec un corps de cellule de pesage (1) formant une baguette de refoulement, comprenant une première section d'introduction de charge (2), une deuxième section d'introduction de charge (3), et une section de mesure (4) agencée coaxialement entre la première section d'introduction de charge (2) et la deuxième section d'introduction de charge (3), dans laquelle la section de mesure (4) et au moins l'une des sections d'introduction de charge (2, 3) est respectivement constituée de matériaux différents, **caractérisé en ce que** le corps de cellule de pesage (1) est formé en plusieurs pièces, la section de mesure (4) et la section d'introduction de charge (2; 3) sont formées comme des pièces séparées, où la section de mesure (4) et la section d'introduction de charge (2; 3) respective se touchent sur une surface de jonction (5, 6), la surface de jonction (5) est formée sur une saillie de jonction (11) périphérique faisant saillie vers l'avant dans la direction axiale, formée sur la section d'introduction de charge (2; 3), la surface de jonction (5) étant dirigée vers la section de mesure (4) en tant que pièce opposée.

27. Procédé selon la revendication 25 ou 26, **caractérisée en ce que** la section de mesure (4) et la section d'introduction de charge (2; 3), et de préférence toutes les sections d'introduction de charge (2, 3), sont fabriquées à partir d'une pièce brute correspondante (14, 15, 16), de préférence cylindrique.
